# EUROPEAN PATENT SPECIFICATION

(11) **EP 0 968 137 B1**
(45) Date of publication and mention of the grant of the patent: **28.09.2005**
(21) Application number: 99900009.4
(22) Date of filing: 04.01.1999
(51) Int. Cl.: C02F 3/08

(54) **WASTEWATER TREATMENT PLANT FOR OLIVE OIL PROCESSING EFFLUENTS COMPRISING A ROTATING BIOLOGICAL CONTACTOR WITH THE ADDITION OF LINEAR OR CIRCULAR MOTION**
ABWASSERBEHANDLUNGSANLAGE FÜR ABWASSER AUS DER OLIVENÖLHERSTELLLUNG MIT EINEM DREHBAREN BIOLOGISCHEN TAUCHTROPFKÖRPER UND ZUSÄTZLICHER LINEARER ODER KREISFÖRMIGER BEWEGUNG
STATION D'EPURATION DES EAUX USEES POUR EFFLUENTS DE TRAITEMENT DE L'HUILE D'OLIVE COMPORTANT UN CONTACTEUR BIOLOGIQUE ROTATIF PERMETTANT UN MOUVEMENT LINEAIRE OU CIRCULAIRE

(30) Priority: 02.01.1998 GR 98100001
(43) Date of publication of application: 05.01.2000
(73) Proprietor: Siskos, Aristidis, 55131 Thessaloniki (GR); Siskos, Maria-Iro, 55131 Thessaloniki (GR); Siskos, Angelos, 55131 Thessaloniki (GR); Syrgiannidou, Anna, 55131 Thessaloniki (GR)
(72) Inventor: Siskos, Dimitrios, (GR)
(74) Representative: Altenburg, Udo
(86) International application number: PCT/GR1999/000001
(87) International publication number: WO 1999/035097

(56) References cited:
- DE-A- 19 514 931
- US-A- 4 200 532
- US-A- 5 350 507
- PATENT ABSTRACTS OF JAPAN vol. 008, no. 085 (C-219), 18 April 1984 & JP 59 004492 A (KAJIMA KENSETSU KK), 11 January 1984

## Description

The invention refers to the capacity increase of an aerobic bioconversion system for the wastewater treatment of an olive oil processing plant according to the preamble of claim 1.

In the state of the art, a biocontactor is half submerged inside a tank with olive wastewater having a neutral pH. The biocontactor is seated on fixed points, rotates on a horizontal shaft and performs no other motion. The biomass that grows in the tank of the contactor is of dual form : suspended and superjacent on the filling material. The superjacent biomass grows on the particles of the filling material. The suspended biomass grows inside the wastewater volume of the bioreactor. The wastewater volume in the bioreactor is low and almost equal to the half volume of the statically rotating biocontactor. As a result, the volume remaining for the growth of the suspended biomass is also low, as is the volume of the wastewater to be treated. The method with such a layout for the contactor results in huge capital and operating cost, since the process requires a multiple contactor system for the bioconversion of large wastewater volumes.

From US 4,200,532 a wastewater treatment apparatus comprising a rotatable drum which contains several ball shaped biocontactors is known. The biocontactors only comprise two small openings through which the wastewater passes. US 5,350,507 also discloses a rotating biological contactor for the aerobic bacteriologic treatment of polluted wastewater which comprises a plurality of media-members which support bacteria.

Another rotatable biocontainer is known from JP 59004492. This container is used to clean flowing water. In other words, the rotation of the biocontactor is initiated by the flow of the water.

Accordingly, it is an object of the invention to improve a biocontactor for wastewater treatment in the olive oil processing.

This object is solved by an olive oil wastewater treatment plant according to claim 1.

According to the invention, the plant is consisting of a biocontactor having various shapes which is rotating and simultaneously moving in line or in circle, while the treated wastewater is stationary. It is applicable for bioreactors with aerobic microorganisms, whose breathing time can be practically utilized for the motion (linear or circular) of the biocontactor or the treated wastewater as is the case in olive oil processing plants, aiming at the reduction of the wastewater phytotoxicity.

The present invention features an additional motion of the rotating biocontactor, of various shapes, in an olive wastewater aerobic bioconversion process using microbial colonies with time for the aerobic reaction practically usable for this motion. The addition of another motion except for the rotation results in multiple increase of the wastewater volume to be treated by the same biocontactor. The additional motion is implemented by the movement of the rotating biocontactor. When the motion is applied to the rotating contactor, this is carried out by placing the contactor on a moving transport trolley. The latter moves either in line to-and-fro or in circle depending on the shape of the tank (rectangular or circular). The breathing time of the microorganisms must be practically usable. The time required for a full lap of the trolley must be less or equal to the time needed by the microorganisms for their next inhalation. Adjustment of the movement velocity or detainment time is possible. The tank dimensions, the movement velocity and the detainment time at each processing plant are adjusted depending on the volume of the wastewater in combination with the breathing time of the aerobic microorganisms for the specific wastewater. The direction of rotation is always the same with the motion of the trolley, in order for this motion to be supported.

With the former technique the biocontactor inoculates microorganisms, mixes and oxygenates. With the additional motion the same biocontactor inoculates, mixes and oxygenates a multiple tank volume and thus a greater wastewater volume. This occurs because during the transport motion the contactor continuously inoculates the whole active tank volume with microorganisms, thus increasing the population density of the suspended biomass, continuously mixes the whole active tank volume (suspended biomass) bringing the lower microorganisms to the upper - rich in oxygen - layer of the tank and oxygenates the whole active tank volume (suspended biomass), since the lap time step is less than the breathing time step of the microorganisms. Practically, as many times the biocontactor volume fits the volume of the reduced tank length for a full lap, the capacity of the system is multiplied by as many times in regard to the former technique. This increase makes the system more efficient and inexpensive in regard with the former technique.

A way of applying the invention on olive oil processing plant wastewater in rectangular tanks, is described below, with reference to drawings explaining the specific implementation, where :

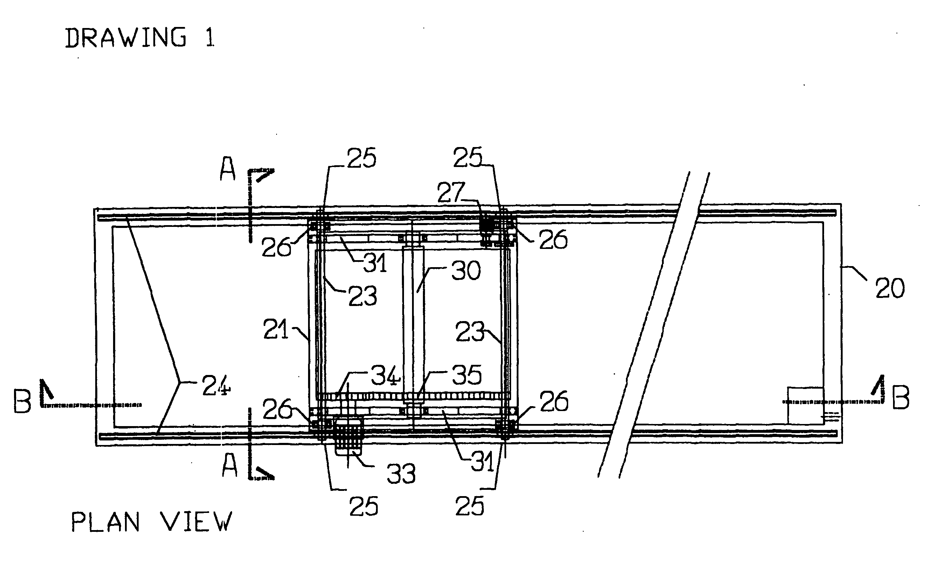

Fig. 1 features the plan view of the bioreactor, which, according to the invention, includes the transport motion of the biocontactor using a swing-moving trolley-bridge.

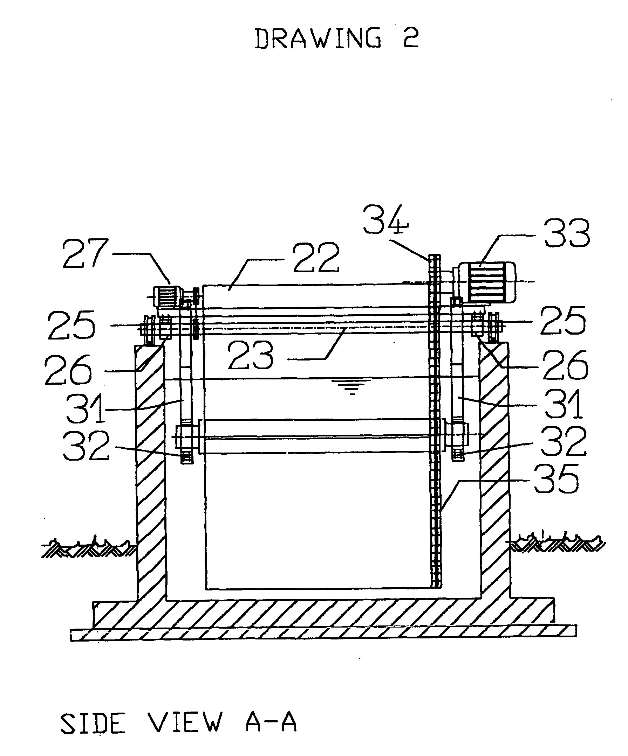

Fig. 2 is the A-A view of the tank - bioreactor, where the front view of the biocontactor and the swinging trolley system are shown.

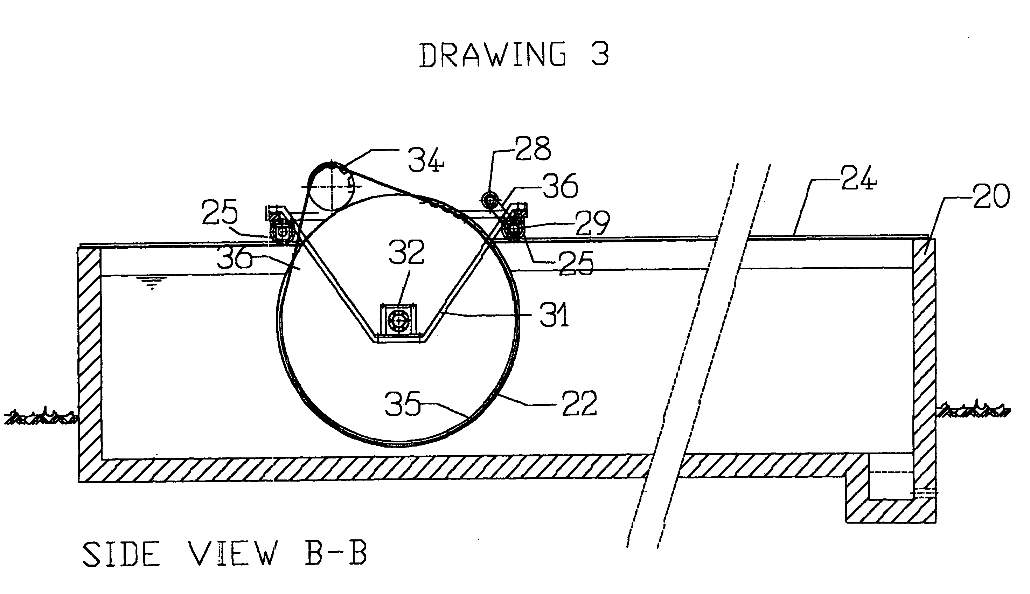

Fig. 3 is the B-B view of the tank - bioreactor, where the side view of the biocontactor and the two different transmission systems are shown.
According to the drawings the wastewater bioconversion system is placed in a rectangular tank (20) of suitable dimensions with the incoming olive oil wastewater. This system consists of the rotating biocontactor (22) and the trolley-bridge which ensures the support of the whole biocontactor system plus its horizontal - swinging movement across the tank.

The trolley-bridge consists of a rectangular support frame (21) whose motion is achieved via a four-wheel rolling system (25). The shafts (23) of the wheels are fixed to the underpart of the frame with roller bearings (26), which cling to it with bolts. One of these shafts is the driving one. The wheels roll on two rails (24) of upside-down T-cross section, which lie fixed horizontally along and on top of the tank side walls. The transmission system for the driving trolley shaft consists of a protected against the weather electrodrive (27), with rpm fluctuation possibility, which is placed firmly on a metal mount welded io the frame, a system of two gears (28,29) and a heavy duty chain. The gear of the electrodrive (28) moves via the chain the driving gear which is firmly welded on the shaft of the driving wheel pair. The turn direction of the electrodrive shaft, and thus the movement direction of the frame changes each time the trolley reaches the end of the tank, with the help of a terminal switch (there is also an auxiliary) which is actuated by touch on the side wall at the end of the railway. The biocontactor (22) rotation shaft (30) support on the frame (21) is achieved with two straps (31) and two roller bearings (32). The straps of ∀-shape are made of stainless steel reinforced plate of rectangular cross-section and actually hang onto the frame fixed with bolts.

The roller bearing (32) of the biocontactor rotation shaft (30) is fixed with bolts in the underpart of each strap and on top of it. The bearings are waterproof, self-lubricating and easy to dismantle, since they are suitably placed in a removable rectangular shell. This ensures easy assembly and disassembly of the biocontactor (22).

The biocontactor transmission system consists of an electrodrive (33) protected from weather and firmly placed on a metal mount welded onto the frame and a system of cog wheel (34), cog rim (35) and a heavy duty chain (36). The driving gear (34) is set on the shaft of the electrodrive, while the moving rim (35) lies on the biocontactor shaft welded to its one end. The turn direction of the electrodrive shaft, and thus the rotation direction of the biocontactor (22) changes each time the trolley reaches the end of the tank, with the help of the same terminal switch.

The direction of rotation is always the same with the linear motion of the trolley, in order for this motion to be supported.

The system embodies an electrical switchboard - cabinet of thin metal plate which includes a main switch, an automatic star-triangle switch for the biocontactor rotation, an automatic switch for the trolley to-an-fro motion, a current phase supervisor switch with terminal switches, a cable suspension system and telecontrol switches. It also includes a soft starter to avoid any vibration problems at the rotation set-off. The start of the biocontactor and frame electrodrives proceed with a time lag, the contactor starting first in order to avoid overloading of the system and at the same time help the movement of the trolley.

## Claims

1. Olive oil wastewater treatment plant, comprising:
- a tank (20) containing olive oil wastewater;
- a bio-contactor (22), which is submerged half inside said tank (20) and which is rotatably supported, whereas the bio-contactor (22) is of cylindrical shape and comprises at least two compartments, at least one of which contains a fixed-bed filling, and whereas the surface of the bio-contactor (22) is permeable to liquid;
**characterized in that**
the bio-contactor (22) is supported on a frame (21) which is moveably mounted so as to enable the bio-contactor (22) to be linearly displaceable inside the tank (20), while the bio-contactor (22) is rotating,
and **in that** the frame (21) is supported on a trolley which is guided along rails based on opposite sides of the tank (20),
whereas both the angular velocity and the velocity of the linear displacement of the bio-contactor (22) are adjustable, and
whereas the direction of the rotation of the bio-contactor (22) corresponds to the direction of its linear movement.

## Patentansprüche

1. Olivenöl-Abwasser-Behandlungsanlage, umfassend:
- einen Tank (20), der Olivenöl-Abwasser enthält;
- einen Biokontaktor (22), welcher halb in den Tank (20) eingetaucht ist und welcher drehbar gestützt ist, wobei der Biokontaktor (22) eine zylindrische Gestalt aufweist und wenigstens zwei Abteile umfasst, von denen wenigstens eines eine Festbettfüllung enthält und
wobei die Oberfläche des Biokontaktors (22) durchlässig für Flüssigkeit ist;
**dadurch gekennzeichnet, dass**
der Biokontaktor (22) auf einem Rahmen (21) gestützt wird, so dass er es ermöglicht, dass der Biokontaktor (22) linear verschiebbar innerhalb des Tanks (20) ist, während der Biokontaktor (22) rotiert,
und **dadurch**, dass der Rahmen (21) auf einem Wagen gestützt ist, welcher entlang von Schienen geführt wird, die auf gegenüberliegenden Seiten des Tanks (20) basieren,
wobei die Winkelgeschwindigkeit und die Geschwindigkeit der linearen Verschiebung des Biokontaktors (22) justierbar sind, und wobei die Richtung der Rotation des Biokontaktors (22) der Richtung seiner linearen Bewegung entspricht.

## Revendications

1. Installation de traitement des eaux usées résultant de la fabrication d'huile d'olive, comprenant :
- une cuve (20) contenant les eaux usées de fabrication d'huile d'olive ;
- un biocontacteur (22), qui est à moitié immergé à l'intérieur de ladite cuve (20) et qui est soutenu de façon à pouvoir tourner, dans lequel le biocontacteur (22) est de forme cylindrique et comprend au moins deux compartiments, au moins l'un d'eux contenant un remplissage à lit fixe, et dans lequel la surface du biocontacteur (22) est perméable au liquide ;
**caractérisée en ce que**
le biocontacteur (22) est soutenu par un bâti (21) qui est monté de manière mobile de façon à permettre le déplacement linéaire du biocontacteur (22) à l'intérieur de la cuve (20), tandis que le biocontacteur (22) est en rotation,
et **en ce que** le bâti (21) est porté par un chariot, guidé le long de rails disposés sur des côtés opposés de la cuve (20),
dans lequel à la fois la vitesse angulaire et la vitesse du déplacement linéaire du biocontacteur (22) sont réglables, et
dans lequel le sens de rotation du biocontacteur (22) correspond au sens de son déplacement linéaire.
